# EUROPÄISCHE PATENTSCHRIFT

(11) **EP 2 755 771 B1**
(45) Veröffentlichungstag und Bekanntmachung des Hinweises auf die Patenterteilung: **01.03.2017**
(21) Anmeldenummer: 12761595.3
(22) Anmeldetag: 13.09.2012
(51) Int. Cl.: B05B 11/00

(54) **INTERMITTIERENDES BESCHICHTEN VON BEWEGTEN OBERFLÄCHEN**
INTERMITTENT COATING OF MOVING SURFACES
ENDUCTION INTERMITTENTE DE SURFACES EN MOUVEMENT

(30) Priorität: 13.09.2011 DE 102011082631
(43) Veröffentlichungstag der Anmeldung: 23.07.2014
(73) Patentinhaber: VW-VM Forschungsgesellschaft mbH & Co. KG, 73479 Ellwangen Jagst (DE)
(72) Erfinder: HUTH, Andreas, 73479 Ellwangen (DE); SEKLER, Robert, 73479 Ellwangen-Rattstadt (DE)
(74) Vertreter: Patentanwaltskanzlei Cartagena
(86) Internationale Anmeldenummer: PCT/EP2012/068006
(87) Internationale Veröffentlichungsnummer: WO 2013/037920

(56) Entgegenhaltungen:
- EP-A2- 0 814 525
- EP-A2- 1 604 600
- JP-A- 11 333 359
- JP-A- 2009 039 617
- US-A1- 2009 001 099

## Beschreibung

Die vorliegende Erfindung betrifft ein Verfahren und eine Vorrichtung zum intermittierenden Beschichten von bewegten Oberflächen mit einer Paste, die elektrochemisch aktive Partikel enthält, wobei eine Düse mit einer schlitzförmigen Austragsöffnung zum Einsatz kommt.

Der Begriff "Batterie" meinte ursprünglich mehrere in Serie geschaltete galvanische Zellen. Heute werden jedoch auch einzelne galvanische Zellen häufig als Batterie bezeichnet. Bei der Entladung einer galvanischen Zelle findet eine energieliefernde chemische Reaktion statt, welche sich aus zwei elektrisch miteinander gekoppelten aber räumlich voneinander getrennten Teilreaktionen zusammensetzt. An der negativen Elektrode werden in einem Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden lonenstrom innerhalb der Zelle. Dieser Ionenstrom wird durch einen ionenleitenden Elektrolyten gewährleistet. In sekundären Zellen und Batterien ist diese Entladereaktion reversibel, es besteht also die Möglichkeit, die bei der Entladung erfolgte Umwandlung chemischer Energie in elektrische umzukehren.

Unter den bekannten sekundären Zellen und Batterien werden vergleichsweise hohe Energiedichten insbesondere von Lithium-Ionen-Batterien erreicht. Lithium-Ionen-Batterien enthalten in vielen Fällen einen Zellenstapel (stack), der aus mehreren Einzelzellen besteht. Auch Wickelzellen (coils) kommen häufig zum Einsatz. Bei den Zellen in einer Lithium-Ionen-Batterie handelt es sich meist um einen Verbund aus Elektroden- und Separatorfolien mit der Sequenz positive Elektrode/Separator/negative Elektrode. Häufig werden solche Einzelzellen als sogenannte Bizellen mit den möglichen Sequenzen negative Elektrode/Separator/positive Elektrode/Separator/negative Elektrode oder positive Elektrode/Separator/negative Elektrode/Separator/positive Elektrode hergestellt. Die Elektroden umfassen dabei üblicherweise metallische Stromkollektoren, die meist in Form von Flächengebilden vorliegen. Im Fall der positiven Elektrode handelt es sich dabei meist um Netze oder Folien aus Aluminium, beispielsweise aus Aluminiumstreckmetall oder aus einer gelochten Aluminiumfolie. Auf der Seite der negativen Elektrode werden als Kollektoren meist Netze oder Folien aus Kupfer verwendet.

In der Regel werden die beschriebenen Zellen für Lithium-Ionen-Batterien in einem mehrstufigen Verfahren produziert. Üblich ist, dass in einem ersten Schritt die erwähnten Elektrodenfolien hergestellt werden, die dann anschließend mit einer oder mehreren Separatorfolien zu den erwähnten Elektroden-Separator-Verbünden kombiniert werden. Meist werden Elektroden und Separatoren in einem Laminationsschritt miteinander verbunden.

Zur Herstellung der Elektroden wird üblicherweise eine flache Schicht aus einem pastenförmigen Material (kurz "Paste"), das elektrochemisch aktive Partikel enthält, auf einen geeigneten Kollektor aufgebracht und anschließend getrocknet. Bevorzugt wird die Paste auf beide Seiten des Kollektors aufgebracht. Produktionstechnisch wird dies meist realisiert, indem die Kollektoren als quasi endlose Bänder bereitgestellt werden, die anschließend eine Beschichtungseinrichtung durchlaufen, in der durch intermittierende Beschichtung eine abgesetzte, in Laufrichtung in definierten Abständen unterbrochene Beschichtung des Kollektors erfolgt. Das aus der Beschichtungseinrichtung austretende Kollektorband weist entsprechend in Laufrichtung alternierend beschichtete und unbeschichtete Bereiche auf. Eine Auftrennung des Kollektorbandes kann anschließend durch Zerschneiden des Bandes in den unbeschichteten Bereichen erfolgen.

Die Paste beispielsweise mit einem Rakel auf die Kollektoren aufgebracht werden, an dessen Stelle können aber auch Breitschlitzdüsen (slot-die-Düsen) zum Einsatz kommen, die sich hervorragend für Hochdurchsatzanwendungen eignen. Diese weisen eine schlitzförmige Austragsöffnung für die Paste auf, die dieser aus einem Pastenreservoir über einen Transportkanal zugeführt wird. Zum intermittierenden Beschichten wird der Pastenstrom in Richtung der Austragsöffnung mittels eines Steuermittels reguliert, das diesen in regelmäßigen Zeitabständen blockiert. Diese Vorgehensweise bringt jedoch insbesondere bei Pasten mit hohen elastischen Anteilen Nachteile mit sich. Derartige Pasten entspannen sich über viskose Fließvorgänge nach dem Unterbrechen der Pastenzufuhr in Richtung der schlitzförmigen Austragsöffnung, wo sich ein Tropfen ausbilden kann, der dazu führt, dass im nächsten Beschichtungsintervall eine Kante mit unerwünschter Dicke gebildet wird. Gegebenenfalls kann der Tropfen auch das durchlaufende Kollektorband berühren und unbeschichtete Bereiche des Bandes verschmutzen.

Aus der US 2004/0062866 A1 ist ein Beschichtungsapparat bekannt, mittels dem Farbe diskontinuierlich auf ein flächiges Basismaterial aufgebracht wird. Die Farbe wird dabei aus einem Reservoir in einen Düsenkopf gepumpt, in welchem sich ein Sammelbehälter befindet, der mittels eines Kolbensystems mit Unterdruck beaufschlagt werden kann. Bei einer Unterbrechung der Beschichtung kann der Sammelbehälter mit Unterdruck beaufschlagt werden, und zwar mittels des erwähnten Kolbensystems. Einem unbeabsichtigten Farbaustrag kann dadurch entgegengewirkt werden. Die Verarbeitung von Pasten für Elektroden findet in der US 2004/0062866 A1 allerdings keine Erwähnung.

Aus der EP 0814525 A2 ist ein Verfahren zum intermittierenden Beschichten einer bewegten Oberfläche mit einer Paste bekannt, wobei die Paste elektrochemisch aktive Partikel enthalten kann. Das Beschichten erfolgt unter Verwendung einer Düse mit einer schlitzförmigen Austragsöffnung. Die Düse kann mittels einer Unterdruckquelle mit Unterdruck beaufschlagt werden.

Der vorliegenden Erfindung lag die Aufgabe zugrunde, eine Vorrichtung und ein Verfahren zum intermittierenden Beschichten einer bewegten Oberfläche mit einer Paste, die elektrochemisch aktive Partikel enthält, bereitzustellen, bei denen die beschriebenen Probleme betreffend die Bildung von Tropfen beim Beschichtungsprozess vermieden werden können.

Diese Aufgabe wird gelöst durch das Verfahren mit den Merkmalen des Anspruchs 1 und die Vorrichtung mit den Merkmalen des Anspruchs 4. Bevorzugte Ausführungsformen des erfindungsgemäßen Verfahrens sind in den Ansprüchen 2 und 3 angegeben.

Das erfindungsgemäße Verfahren dient zum intermittierenden Beschichten von bewegten Oberflächen mit einer Paste, die elektrochemisch aktive Partikel (im Folgenden auch als elektrochemisches Aktivmaterial bezeichnet) enthält. Insbesondere handelt es sich bei der Paste um eine Paste zur Herstellung von Batterieelektroden und bei den elektrochemisch aktiven Partikeln entsprechend um Partikel, die sich bei den eingangs beschriebenen Lade- und/oder Entladevorgängen in einer Batterie chemisch durch Aufnahme und/oder Abgabe von Elektronen und/oder Ionen verändern. Mit anderen Worten, bei dem erfindungsgemäßen Verfahren handelt es sich auch um ein Verfahren zur Herstellung von Batterieelektroden.

Allerdings kann das erfindungsgemäße Verfahren z.B. auch zur Herstellung der elektrokatalytischen Schicht einer Brennstoffzelle dienen. In diesem Fall werden Pasten verarbeitet, die als elektrochemisch aktive Partikel Katalysatorpartikel (Edelmetalle, Raney-Nickel, Wolframcarbid, Molybdänsulfide, Wolframsulfide oder ähnliche geeignete Materialien) enthalten, die die kalte Verbrennung von Brennstoffen wie Wasserstoff oder Methanol katalysieren können.

Bei der bewegten Oberfläche handelt es sich insbesondere im Fall der Herstellung von Batterielektroden bevorzugt um die Ober- und/oder Unterseite der eingangs genannten Kollektorbänder oder um Trägersubstrate wie Walzen oder andere flächige Substrate, von denen aus aus der Paste gebildete Elektroden auf solche Kollektorbänder übertragen werden können.

Mit dem erfindungsgemäßen Verfahren lassen sich sowohl positive als auch negative Elektroden für Batterien herstellen. In einer bevorzugten Ausführungsform des erfindungsgemäßen Verfahrens handelt es sich bei der bewegten Oberfläche um eine Seite eines Stromkollektors aus Aluminium und bei der Paste um eine Elektrodenpaste umfassend ein Material für die positive Elektrode von Batterien, insbesondere von Lithium-Ionen-Batterien. In einer weiteren bevorzugten Ausführungsform des erfindungsgemäßen Verfahrens handelt es sich bei der bewegten Oberfläche um die Oberfläche eines Stromkollektors aus Kupfer und bei der Paste um eine Elektrodenpaste umfassend ein Material für die negative Elektrode einer Batterie, insbesondere einer Lithium-Ionen-Batterie.

Als Beispiel für eine Elektrodenpaste für die negative Elektrode einer Lithium-Ionen-Batterie wäre eine Paste umfassend ein geeignetes Lösungs- und/oder Dispergiermittel, Graphitpartikel als elektrochemisches Aktivmaterial, einen Elektrodenbinder wie Natriumcarboxymethylzellulose und gegebenenfalls ein Leitfähigkeitsadditiv zu nennen. Eine Paste für die positive Elektrode könnte neben einem geeigneten Lösungs- und/oder Dispergiermittel beispielsweise als elektrochemisches Aktivmaterial Lithiumkobaltoxid sowie ebenfalls einen Elektrodenbinder und ein Leitfähigkeitsadditiv umfassen. Die Pasten können in Abhängigkeit der gewählten Aktivmaterialien und Binder ein wässriges und/oder nicht wässriges Lösungs- und/oder Dispergiermittel aufweisen.

Appliziert werden die Pasten im Rahmen eines erfindungsgemäßen Verfahrens unter Verwendung einer Düse mit einer schlitzförmigen Austragsöffnung, der die Paste aus einem Pastenreservoir über einen Transportkanal zugeführt wird. Das Pastenreservoir kann zur Förderung der Paste unter Druck stehen, alternativ kann dem Pastenreservoir z.B. aber auch eine Pumpe nachgeschaltet sein. Reguliert wird die Pastenzufuhr zu der Austragsöffnung mittels eines Steuermittels, das in einer ersten Schaltstellung die Pastenzufuhr zu der Austragsöffnung freigibt und in einer zweiten Schaltstellung den Transportkanal blockiert und dabei einen bis zur Austragsöffnung reichenden Abschnitt des Transportkanals von der Pastenzufuhr abschneidet.

Besonders zeichnet sich das erfindungsgemäße Verfahren dadurch aus, dass der von der Pastenzufuhr abgeschnittene Abschnitt des Transportkanals und damit auch im Transportkanal befindliche Paste mit Unterdruck beaufschlagt wird, wenn sich das Steuermittel in der zweiten Schaltstellung befindet. Dadurch wird der eingangs erwähnten Entspannung der Paste über viskose Fließvorgänge in Richtung der Austragsöffnung entgegengewirkt, so dass die Ausbildung eines Tropfens an der Austragsöffnung verhindert werden kann.

Zum Beaufschlagen des von der Pastenzufuhr abgeschnittenen Abschnitts des Transportkanals ist das im Rahmen eines erfindungsgemäßen Verfahrens zum Einsatz kommende Steuermittel derart ausgebildet, dass es in der zweiten Schaltstellung den abgeschnittenen Teil des Transportkanals mit einer Unterdruckquelle verbindet. Mit besonderem Vorteil kann dies realisiert werden, indem als Steuermittel eine drehbar gelagerte und vorzugsweise zylindrisch ausgebildete Steuerachse gewählt wird, die einen Durchlaß aufweist, über den in der ersten Schaltstellung das Pastenreservoir mit der Austragsöffnung und in der zweiten Schaltstellung der abgeschnittene Teil des Transportkanals mit der Unterdruckquelle in kommunizierender Verbindung steht.

Damit die schlitzförmige Austragsöffnung möglichst gleichmäßig mit Elektrodenpaste gespeist werden kann, ist zumindest der Abschnitt des Transportkanals zwischen dem Steuermittel und der Austragsöffnung bevorzugt ebenfalls schlitzförmig ausgebildet. Über eine Steuerachse lassen sich Pastenströme durch solche schlitzförmigen Transportkanäle besonders effizient regulieren. Bei dem erwähnten Durchlaß in der Steuerachse handelt es sich in bevorzugten Ausführungsformen um einen schlitzförmigen Durchlaß, dessen Längsschnitt an die Dimensionen und Geometrie des schlitzförmigen Abschnitts des Transportkanals angepasst ist, so dass in der ersten Schaltstellung ein möglichst widerstandsfreier Durchfluss der Paste durch den Durchlaß gewährleistet ist. Derartige Durchlässe lassen sich besonders gut durch Drahtfunkenerosion in die Steuerachse einbringen.

Bevorzugt ist die Steuerachse drehbar in einer bevorzugt zylindrischen Bohrung gelagert. In diese treten der vom Pastenreservoir kommende Teil des Transportkanals sowie mindestens ein von der Unterdruckquelle ausgehender Unterdruckkanal ein. Weiterhin weist die Bohrung einen Auslaß in Richtung der schlitzförmigen Austrittsöffnung aus. Zumindest der Auslaß und die Eintrittsöffnung des Transportkanals weisen bevorzugt die erwähnte Schlitzform auf. Bevorzugt handelt es sich bei beiden um schlitzförmige Öffnungen, die die Wand der Bohrung axial durchbrechen. Der Eintritt des Unterdruckkanals ist nicht notwendigerweise schlitzförmig.

Die erfindungsgemäße Vorrichtung dient insbesondere zur Durchführung des beschriebenen Verfahrens, also zum intermittierenden Beschichten einer bewegten Oberfläche mit einer Paste, die elektrochemisch aktive Partikel enthält. Sie umfasst eine Düse, die die folgenden Komponenten aufweist:
- eine schlitzförmige Austragsöffnung
- einen Transportkanal, über den die Paste aus einem Pastenreservoir der Austragsöffnung zugeführt wird
- ein Steuermittel, das die Pastenzufuhr zu der Austragsöffnung reguliert und das derart ausgebildet ist, dass es in einer ersten Schaltstellung die Pastenzufuhr zu der Austragsöffnung freigibt und in einer zweiten Schaltstellung den Transportkanal blockiert und einen bis zur Austragsöffnung reichenden Abschnitt des Transportkanals von der Pastenzufuhr abschneidet
- einen Unterdruckkanal, über den der von der Pastenzufuhr abgeschnittene Abschnitt des Transportkanals mit einer Unterdruckquelle verbunden werden kann, wenn sich das Steuermittel in der zweiten Schaltstellung befindet

Betreffend bevorzugte Ausführungsformen des Transportkanals und des Steuermittels wird auf die obigen Ausführungen verwiesen. Bei der Unterdruckquelle kann es sich um eine handelsübliche Vakuumpumpe handeln. Bevorzugt ist die Unterdruckquelle über den Unterdruckkanal sowie den bereits beschriebenen Durchlaß im Steuermittel an den in der zweiten Schaltstellung von der Pastenzufuhr abgeschnittenen Teil des Transportkanals gekoppelt.

Näher erläutert werden das erfindungsgemäße Verfahren und die erfindungsgemäße Vorrichtung anhand der Zeichnungen. Es sei an dieser Stelle explizit betont, dass sämtliche in der vorliegenden Anmeldung beschriebenen fakultativen Aspekte des erfindungsgemäßen Verfahrens und der erfindungsgemäßen Vorrichtung jeweils für sich oder in Kombination mit einem oder mehreren der weiteren beschriebenen fakultativen Aspekte bei einer Ausführungsform der Erfindung verwirklicht sein können. Die nachfolgende Beschreibung von bevorzugten Ausführungsformen dient lediglich zur Erläuterung und zum besseren Verständnis der Erfindung und ist in keiner Weise einschränkend zu verstehen.

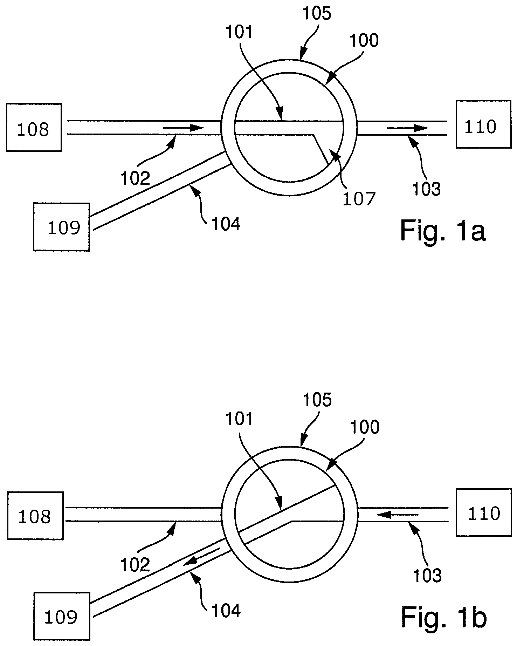

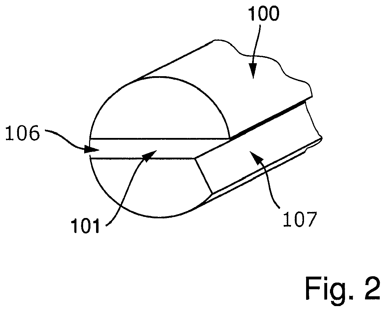

**Fig. 1a** und **Fig. 1b** illustrieren schematisch die erste und die zweite Schaltstellung, die das Steuermittel einer erfindungsgemäßen Vorrichtung einnehmen kann. Anhand von **Fig. 2** wird eine bevorzugte Ausführungsform eines Steuermittels näher erläutert.

In **Fig. 1a** ist die Steuerachse **100** im Querschnitt dargestellt, sie befindet sich in der ersten Schaltstellung, in der der von einem Pastenreservoir **108** führende Transportkanalabschnitt **102** über den schlitzförmigen Durchlaß **101** mit dem zu einer schlitzförmigen Düse **110** führenden Transportkanalabschnitt **103** verbunden ist. Die Bewegungsrichtung der Paste im Transportkanal ist durch Pfeile dargestellt. Die Steuerachse **100** ist drehbar in der Bohrung **105** gelagert. Durch eine Drehung der Steuerachse von ca. 25 ° (gegen den Uhrzeigersinn) wird sie in die zweite Schaltstellung überführt. Diese ist in **Fig. 1b** dargestellt. Der Transportkanal ist nun blockiert, der Abschnitt **103** des Transportkanals von der Pastenzufuhr abgeschnitten. Dafür steht er aber nun über den schlitzförmigen Durchlaß **101** mit dem zu einer Unterdruckquelle **109** führenden Unterdruckkanal **104** in kommunizierender Verbindung. Der Abschnitt **103** kann über diesen mit Unterdruck beaufschlagt werden. Dieser übt auf im Abschnitt **103** befindliche Paste eine Zugkraft in Richtung der eingezeichneten Pfeile aus.

Eine alternative Schnittdarstellung der Steuerachse **100** findet sich in **Fig. 2****.** Hier ist zu erkennen, dass der schlitzförmige Durchlaß **101** zwei unterschiedlich ausgebildete Austrittsöffnungen aufweist. Der Öffnungswinkel der Öffnung **107** ist deutlich größer als der Öffnungswinkel der Öffnung **106.** Dies gewährleistet, dass bei einer Drehung der Steuerachse **100** in die zweite Schaltstellung der Durchlaß **101** an den Transportkanalabschnitt **103** angekoppelt bleibt. Die Größe des Öffnungswinkels muß dabei auf den radialen Abstand zwischen dem Transportkanalabschnitt **102** und dem Unterdruckkanal **104** abgestimmt sein. In der Regel liegt der Öffnungswinkel zwischen 10° und 90°.

## Patentansprüche

1. Verfahren zum intermittierenden Beschichten einer bewegten Oberfläche mit einer Paste, die elektrochemisch aktive Partikel enthält, unter Verwendung einer Düse (110) mit einer schlitzförmigen Austragsöffnung, wobei die Paste aus einem Pastenreservoir (108) über einen Transportkanal (102) der Austragsöffnung zugeführt wird und die Pastenzufuhr zu der Austragsöffnung mit einem Steuermittel (100) reguliert wird, das in einer ersten Schaltstellung die Pastenzufuhr zu der Austragsöffnung freigibt und in einer zweiten Schaltstellung den Transportkanal (102) blockiert und einen bis zur Austragsöffnung reichenden Abschnitt (103) des Transportkanals von der Pastenzufuhr abschneidet, wobei der von der Pastenzufuhr abgeschnittene Abschnitt (103) des Transportkanals mit Unterdruck beaufschlagt wird, wenn sich das Steuermittel (100) in der zweiten Schaltstellung befindet, **dadurch gekennzeichnet, dass** das Steuermittel (100) derart ausgebildet ist, dass es in der zweiten Schaltstellung den abgeschnittenen Teil (103) des Transportkanals mit einer Unterdruckquelle (109) verbindet.

2. Verfahren nach Anspruch 1, **dadurch gekennzeichnet, dass** es sich bei dem Steuermittel (100) um eine drehbar gelagerte Steuerachse handelt, die einen Durchlaß (101) aufweist, über den in der ersten Schaltstellung das Pastenreservoir (108) mit der Austragsöffnung und in der zweiten Schaltstellung der abgeschnittene Teil (103) des Transportkanals mit der Unterdruckquelle (109) in kommunizierender Verbindung steht.

3. Verfahren nach Anspruch 2, **dadurch gekennzeichnet, dass** die Steuerachse drehbar in einer Bohrung gelagert ist, in welche der Transportkanal (102) sowie ein von der Unterdruckquelle ausgehender Unterdruckkanal (104) münden.

4. Vorrichtung zum intermitterenden Beschichten einer bewegten Oberfläche mit einer Paste, die elektrochemisch aktive Partikel enthält, umfassend eine Düse (110) mit
• einer schlitzförmigen Austragsöffnung,
• einem Transportkanal (102), über den die Paste aus einem Pastenreservoir (108) der Austragsöffnung zugeführt wird,
• einem Steuermittel (100), das die Pastenzufuhr zu der Austragsöffnung reguliert und das in einer ersten Schaltstellung die Pastenzufuhr zu der Austragsöffnung freigibt und in einer zweiten Schaltstellung den Transportkanal (102) blockiert und einen bis zur Austragsöffnung reichenden Abschnitt (103) des Transportkanals von der Pastenzufuhr abschneidet, und
• einem Unterdruckkanal (104), über den der von der Pastenzufuhr abgeschnittene Abschnitt (103) des Transportkanals mit einer Unterdruckquelle (109) verbunden werden kann,
**dadurch gekennzeichnet, dass** das Steuermittel (100) derart ausgebildet ist, dass es in der zweiten Schaltstellung den abgeschnittenen Teil (103) des Transportkanals mit der Unterdruckquelle (109) verbindet.

## Claims

1. Method for the intermittent coating of a moving surface with a paste which contains electrochemically active particles, by using a nozzle (110) having a slot-shaped delivery opening, the paste being supplied to the delivery opening from a paste reservoir (108) via a transport channel (102) and the paste supply to the delivery opening being regulated by a control means (100) which enables the paste supply to the delivery opening in a first switching position and, in a second switching position, blocks the transport channel (102) and disconnects a section (103) of the transport channel extending as far as the delivery opening from the paste supply, wherein a reduced pressure is applied to the section (103) of the transport channel disconnected from the paste supply when the control means (100) is in the second switching position, **characterized in that** the control means (100) is formed in such a way that it connects the disconnected part (103) of the transport channel to a reduced pressure source (109) in the second switching position.

2. Method according to Claim 1, **characterized in that** the control means (100) is a rotatably mounted control axle which comprises a passage (101) via which the paste reservoir (108) is in communicating connection with the delivery opening in the first switching position and the disconnected part (103) of the transport channel is in communicating connection with the reduced pressure source (109) in the second switching position.

3. Method according to Claim 2, **characterized in that** the control axle is mounted rotatably in a bore into which the transport channel (102) and a reduced pressure channel (104) coming from the reduced pressure source open.

4. Device for the intermittent coating of a moving surface with a paste which contains electrochemically active particles, comprising a nozzle (110) having
• a slot-shaped delivery opening,
• a transport channel (102), via which the paste is supplied to the delivery opening from a paste reservoir (108),
• a control means (100) which regulates the paste supply to the delivery opening, enables the paste supply to the delivery opening in a first switching position and, in a second switching position, blocks the transport channel (102) and disconnects a section (103) of the transport channel extending as far as the delivery opening from the paste supply, and
• a reduced pressure channel (104), via which the section (103) of the transport channel disconnected from the paste supply can be connected to a reduced pressure source (109),
**characterized in that** the control means (100) is formed in such a way that it connects the disconnected part (103) of the transport channel to the reduced pressure source (109) in the second switching position.

## Revendications

1. Procédé d'enduction intermittente d'une surface en mouvement avec une pâte, qui contient des particules ayant une activité électrochimique, avec utilisation d'une buse (110) présentant une ouverture de sortie en forme de fente, dans lequel la pâte est fournie à l'ouverture de sortie à partir d'un réservoir de pâte (108) par l'intermédiaire d'un canal de transport (102) et la fourniture de pâte à l'ouverture de sortie est régulée avec un moyen de commande (100), qui dans une première position de commutation libère la fourniture de pâte à l'ouverture de sortie et dans une deuxième position de commutation bloque le canal de transport (102) et prive une partie (103) du canal de transport s'étendant jusqu'à l'ouverture de sortie de la fourniture de pâte, dans lequel la partie (103) du canal de transport privée de la fourniture de pâte est soumise à une dépression, lorsque le moyen de commande (100) se trouve dans la deuxième position de commutation, **caractérisé en ce que** le moyen de commande (100) est configuré de telle manière que dans la deuxième position de commutation il relie la partie (103) du canal de transport privée de pâte à une source de dépression (109).

2. Procédé selon la revendication 1, **caractérisé en ce que** le moyen de commande (100) est un axe de commande monté de façon rotative, qui présente un passage (101) par lequel dans la première position de commutation le réservoir de pâte (108) est en communication avec l'ouverture de sortie et dans la deuxième position de commutation la partie (103) du canal de transport privée de pâte est en communication avec la source de dépression (109).

3. Procédé selon la revendication 2, **caractérisé en ce que** l'axe de commande est monté de façon rotative dans un alésage, dans lequel débouchent le canal de transport (102) ainsi qu'un canal de dépression (104) partant de la source de dépression.

4. Dispositif d'enduction intermittente d'une surface en mouvement avec une pâte, qui contient des particules ayant une activité électrochimique, comprenant une buse (110) présentant
- une ouverture de sortie en forme de fente,
- un canal de transport (102), par l'intermédiaire duquel la pâte est fournie à l'ouverture de sortie à partir d'un réservoir de pâte (108),
- un moyen de commande (100), qui régule la fourniture de pâte à l'ouverture de sortie et qui dans une première position de commutation libère la fourniture de pâte à l'ouverture de sortie et dans une deuxième position de commutation bloque le canal de transport (102) et prive une partie (103) du canal de transport s'étendant jusqu'à l'ouverture de sortie de la fourniture de pâte, et
- un canal de dépression (104), par l'intermédiaire duquel la partie (103) du canal de transport privée de la fourniture de pâte peut être reliée à une source de dépression (109),
**caractérisé en ce que** le moyen de commande (100) est configuré de telle manière que dans la deuxième position de commutation il relie la partie (103) du canal de transport privée de pâte à la source de dépression (109).
